# EUROPEAN PATENT SPECIFICATION

(11) **EP 2 342 882 B1**
(45) Date of publication and mention of the grant of the patent: **05.12.2018**
(21) Application number: 08823957.9
(22) Date of filing: 29.09.2008
(51) Int. Cl.: H04L 29/06, H04L 29/08, H04M 3/487

(54) **CALL RESPONSE SERVICES IN IMS NETWORKS FOR BUSINESSES**
ANRUFBEANTWORTUNGSDIENSTE IN IMS NETZWERKEN FÜR UNTERNEHMEN
SERVICES DE RÉPONSE D'APPEL DANS RÉSEAUX IMS D'ENTREPRISES

(43) Date of publication of application: 13.07.2011
(73) Proprietor: Alcatel-Lucent USA Inc., Murray Hill, NJ 07974-0636 (US)
(72) Inventor: CAI, Yigang, Naperville Illinois 60564 (US); HUA, Suzann, Lisle Illinois 60532 (US)
(74) Representative: Nokia EPO representatives
(86) International application number: PCT/US2008/078102
(87) International publication number: WO 2010/036272

(56) References cited:
- EP-A1- 2 139 268
- "3rd Generation Partnership Project; Technical Specification Group Core Network; IP Multimedia (IM) session handling; IM call model; Stage 2 (Release 7)" 3GPP STANDARD; 3GPP TS 23.218, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.5.0, 1 March 2007 (2007-03-01), pages 1-59, XP050363197
- SAWADA KDDI CORPORATION P KYZIVAT CISCO SYSTEMS T ET AL: "SIP (Session Initiation Protocol) Usage of the Offer/Answer Model; draft-ietf-sipping-sip-offeranswer-08.txt" SIP (SESSION INITIATION PROTOCOL) USAGE OF THE OFFER/ANSWER MODEL; DRAFT-IETF-SIPPING-SIP-OFFERANSWER-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. sipping, no. 8, 25 April 2008 (2008-04-25), XP015059029
- CAMPBELL B ET AL: "Session Initiation Protocol (SIP) Extension for Instant Messaging; rfc3428.txt" IETF STANDARD, INTERNET ENGINEERING TASK FORCE, IETF, CH, 1 December 2002 (2002-12-01), XP015009171 ISSN: 0000-0003
- KHLIFI H ET AL: "IMS for Enterprises" IEEE COMMUNICATIONS MAGAZINE, IEEE SERVICE CENTER, PISCATAWAY, US, vol. 45, no. 7, 1 July 2007 (2007-07-01), pages 68-75, XP011187089 ISSN: 0163-6804
- "3rd Generation Partnership Project; Technical Specification Group Core Network and Terminals; IP multimedia call control protocol based on Session Initiation Protocol (SIP) and Session Description Protocol (SDP); Stage 3 (Release 8)", 3GPP STANDARD; 3GPP TS 24.229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.5.1, 1 September 2008 (2008-09-01), pages 1-559, XP050365038,
- BURGER E ET AL: "Basic Network Media Services with SIP; rfc4240.txt", NETWORK WORKING GROUP RFC 1717, INTERNET SOCIETY (ISOC) 4, RUE DES FALAISES CH- 1205 GENEVA, SWITZERLAND, CH, 1 December 2005 (2005-12-01), XP015043187, ISSN: 0000-0003

## Description

### Background of the Invention

### 1. Field of the Invention

The invention is related to the field of communication networks and, in particular, to call response services provided by IMS networks for businesses so that the business may provide multimedia responses to the multimedia capable calling parties and voice responses to the calling parties that support voice only.

### 2. Statement of the Problem

When a caller places a call to a business, the call is usually answered by an automated attendant or a live phone operator. The automated attendant or the live phone operator may then provide a response to the caller with a list of options for where to forward the call. For example, if the caller places a call to an automobile dealership, an automated attendant may provide a response such as "Press '1' for the sales department, Press '2' for the service department, or Press '3' for the parts department". Presently, for calls placed over traditional telecommunication networks, such as the PSTN, the response provided by the automated attendant or the live phone operator are voice responses only. Unfortunately, businesses may want to provide multimedia responses to their callers instead of just voice responses.

One type of communication network gaining popularity is an IP Multimedia Subsystem (IMS) network. As set forth in the 3^{rd} Generation Partnership Project (3GPP), IMS provides a common core network having a network architecture that allows for various types of access networks. The access network between a communication device and the IMS network may be a cellular network (e.g., CDMA or GSM), a WLAN (e.g., WiFi or WiMAX), an Ethernet network, or another type of wireless or wireline access network. The IMS architecture is initially defined by the 3GPP to provide multimedia services to communication devices over an Internet Protocol (IP) network, as IP networks have become the most cost savings bearer network to transmit video, voice, and data. Service providers are accepting this architecture in next generation network evolution.

With the implementation of IMS networks, businesses may be equipped to send multimedia responses to the callers instead of just voice responses for calls placed over the IMS network. For example, instead of an automobile dealership merely providing a voice response of "Press '1' for the sales department, Press '2' for the service department, or Press '3' for the parts department", the dealership may provide pictures or video of the different departments, provide advertisements or specials, or provide some other type of content to the caller in addition to or in place of a voice response.

One problem with providing multimedia responses is that some callers may not place calls using a multimedia-capable device. Thus, if the business installs an automated attendant or other type of system that provides multimedia responses, the responses will not be properly received by callers that are not properly equipped.

Document 3GPP TS 24.229, specifies the standard for IP multimedia call control protocol based on Session Initiation Protocol (SIP) and Session Description Protocol (SDP).

Document RFC 4240, defines "Basic Network Media Services with SIP".

### Summary of the Solution

Embodiments of the invention solve the above and other related problems through an IMS network that provides a call response service for businesses. Businesses that subscribe to the call response service may implement a call response system that is operable to provide multimedia responses (i.e., a multimedia automated attendant). According to embodiments provided herein, when the IMS network receives call signaling for a call to the business, the IMS network determines whether the calling party device supports multimedia responses. The IMS network then instructs or informs the call response system of the business to provide the proper type of response (multimedia or voice) to the calling party device based on the determination of whether or not the calling party device supports multimedia responses. Through the call response service provided by the IMS network, the business may advantageously provide multimedia responses to the calling parties having multimedia-capable devices, and may provide traditional voice responses to the calling parties having devices that are not multimedia-capable.

One embodiment of the invention comprises a method of providing a call response service in an IMS network. The method includes receiving call signaling for a call from a calling party device to a business that implements a call response system operable to provide multimedia responses. The method further includes determining whether the calling party device supports multimedia responses. If the calling party device does not support multimedia responses, then the method further includes transmitting a control message instructing the call response system to provide a voice response to the calling party device. If the calling party device does support multimedia responses, then the method may further include transmitting a control message instructing the call response system to provide a multimedia response to the calling party device.

The invention may include other exemplary embodiments described below.

### Description of the Drawings

The same reference number represents the same element or same type of element on all drawings.
FIG. 1 illustrates an IMS network in an exemplary embodiment of the invention.
FIG. 2 illustrates a call response application server in an exemplary embodiment of the invention.
FIG. 3 is a flow chart illustrating a method of providing a call response service in an IMS network in an exemplary embodiment of the invention.
FIG. 4 is a flow chart illustrating a method of determining whether a calling party device supports multimedia responses in an exemplary embodiment of the invention.
FIG. 5 is a flow chart illustrating another method of determining whether a calling party device supports multimedia responses in an exemplary embodiment of the invention.
FIG. 6 is a message diagram illustrating the messaging used to provide a call response service in an IMS network in an exemplary embodiment.

### Detailed Description of the Invention

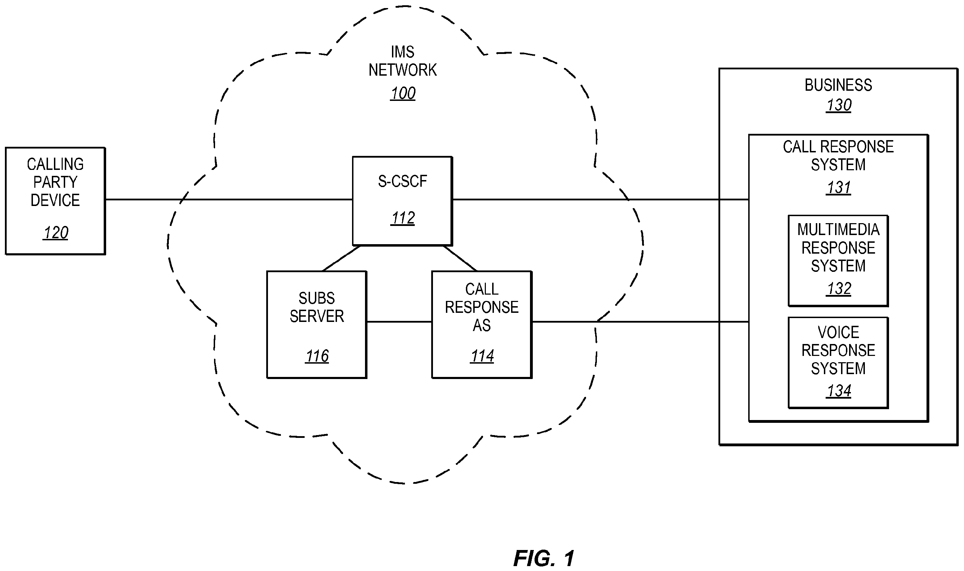

FIGS. 1-6 and the following description depict specific exemplary embodiments of the invention to teach those skilled in the art how to make and use the invention. For the purpose of teaching inventive principles, some conventional aspects of the invention have been simplified or omitted. Those skilled in the art will appreciate variations from these embodiments that fall within the scope of the invention. Those skilled in the art will appreciate that the features described below can be combined in various ways to form multiple variations of the invention. As a result, the invention is not limited to the specific embodiments described below, but only by the claims and their equivalents.

FIG. 1 illustrates an IMS network 100 in an exemplary embodiment of the invention. IMS network 100 is operable to provide communication service (i.e., telecommunication service) to a calling party device 120 and/or a business 130. IMS network 100 includes a serving-call session control function (S-CSCF) 112, a call response application server (AS) 114, and a subscriber server 116. S-CSCF 112 comprises any system or server that is operable to initiate, maintain, and/or tear down sessions (or calls). Call response application server 114 comprises any system or server operable to provide a call response service for businesses. A call response service as described herein operates to determine whether a calling party device supports multimedia responses, and to inform the business as such so that the business may provide the proper response to the calling party device (i.e., a multimedia response or a voice response). Subscriber server 116 comprises any system or server, such as a Home Subscriber Server (HSS), that is operable to store or maintain service profiles for users and/or devices of IMS network 100.

Although calling party device 120 is illustrated as directly connecting to S-CSCF 112 in IMS network 100, those skilled in the art will appreciate that calling party device 120 may connect to S-CSCF 112 through an access network, a P-CSCF, or other network elements. The access network may comprise a cellular network, such as a CDMA network or a GSM network, may comprise a WLAN, such as a WiFi network or a WiMAX network, or may comprise some other type of access network.

Business 130 comprises any company, corporation, enterprise, organization, or other private, public, or governmental entity. Business 130 includes a call response system 131 that is operable to answer calls placed to business 130. Call response system 131 may comprise an automated attendant, a PBX, a key system, or any other system that is operable to automatically answer calls placed to business 130. Call response system 131 includes a multimedia response system 132 and a voice response system 134. Multimedia response system 132 comprises any system, server, or function operable to provide a multimedia response for a call. For example, the multimedia response may comprise a greeting, a call directory for the business 130, a menu or guide for locating to the proper person, extension, department, etc, for the business 130, advertisements, coupons, and/or any other multimedia content that the business 130 desires to provide to a calling party when the party calls the business 130. Voice response system 134 comprises any system, server, or function operable to provide a voice response for a call (i.e., without multimedia). For example, the voice response may comprise a greeting, a call directory for the business 130, a menu or guide for locating to the proper person, extension, department, etc, for the business 130, and/or any other voice content that the business 130 desires to provide to a calling party when the party calls the business 130. Although multimedia response system 132 and voice response system 134 are shown as separate elements, those skilled in the art will appreciate that these systems may be implemented in a combined server.

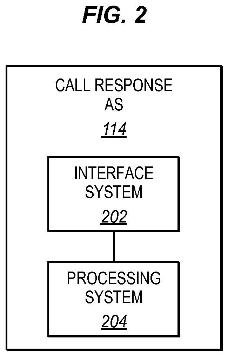

FIG. 2 illustrates call response application server (AS) 114 in an exemplary embodiment of the invention. Call response application server 114 includes an interface system 202 and a processing system 204. Interface system 202 comprises any system, component, or function operable to exchange call signaling or other call messages with network elements in IMS network 100 (e.g., S-CSCF 112 and subscriber server 116), with elements in business 130 (e.g., call response system 131), or with other elements or systems. For example, interface system 202 may exchange SIP messages with S-CSCF 112 and call response system 131. Processing system 204 comprises any processor or set of processors operable to execute instructions that are stored on storage media to operate as described below. Some examples of instructions are software, program code, and firmware. Some examples of storage media are memory devices, tape, disks, integrated circuits, and servers. The instructions are operational when executed by the processor to direct the processor to operate in accordance with the invention. Some examples of processors are computers, integrated circuits, and logic circuitry.

In FIG. 1, business 130 has implemented both a multimedia response system 132 and a voice response system 134 to provide responses to calls placed to business 130. To ensure that multimedia responses are provided to multimedia-capable devices and that voice responses are provided to devices that are not multimedia-capable, business 130 has subscribed to a call response service provided by IMS network 100. Through the operation of call response application server 114, IMS network 100 is able to inform business 130 of which type of response (multimedia or voice) to provide for calls to business 130.

Assume for example that a calling party places a call to business 130 through calling party device 120. To place the call, calling party device 120 transmits the appropriate call signaling, such as a SIP INVITE, to IMS network 100, which is received by S-CSCF 112. S-CSCF 112 processes the call signaling, and determines that business 130 has subscribed to the call response service. Thus, S-CSCF 112 forwards the call signaling to call response application server 114. Call response application server 114 then operates as described below to provide the call response service.

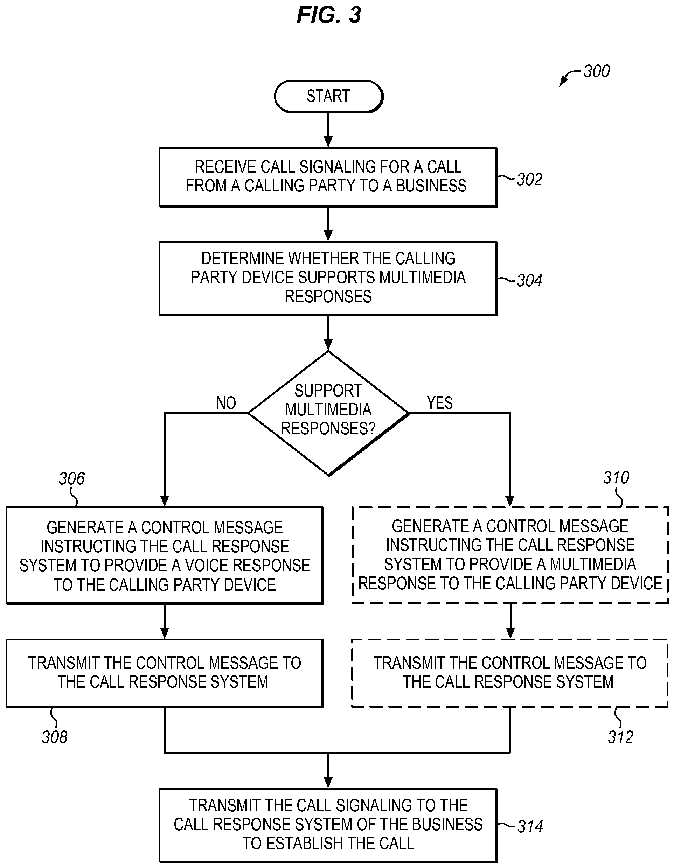

FIG. 3 is a flow chart illustrating a method 300 of providing a call response service in IMS network 100 in an exemplary embodiment of the invention. The steps of method 300 will be described with reference to IMS network 100 in FIG. 1 and call response application server 114 in FIG. 2. The steps of the flow chart in FIG. 3 are not all inclusive and may include other steps not shown.

In step 302, interface system 202 in call response application server 114 receives the call signaling for the call from calling party device 120 to business 130. In step 304, processing system 204 determines whether calling party device 120 supports multimedia responses. For calling party device 120 to support multimedia responses, calling party device 120 would be properly equipped to receive multimedia content, and process the multimedia content in a manner to provide the content to a user as multiple forms of media, such as video, pictures, text, graphics, audio, etc. Processing system 204 may determine whether calling party device 120 supports multimedia responses in a variety of ways.

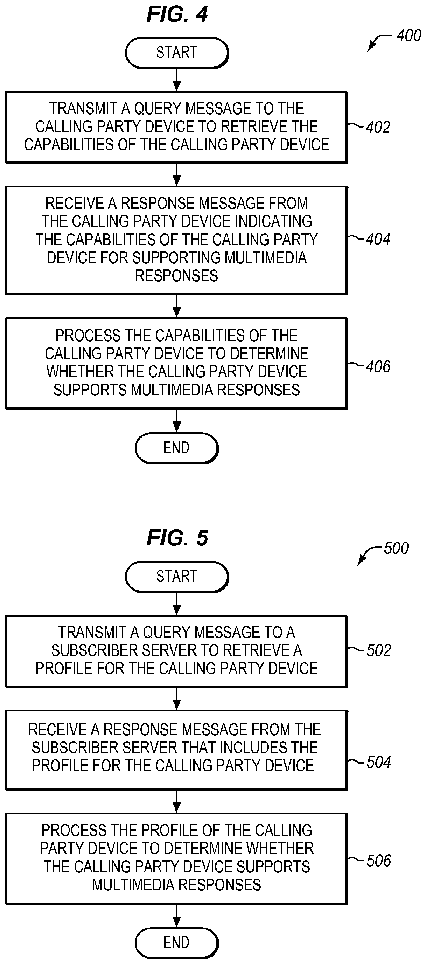

FIG. 4 is a flow chart illustrating a method 400 of determining whether calling party device 120 supports multimedia responses in an exemplary embodiment of the invention. In this embodiment, processing system 204 (see FIG. 2) transmits a query message to calling party device 120 to retrieve the capabilities of calling party device 120 in step 402. For example, processing system 204 may transmit a SIP OPTIONS to calling party device 120 requesting that calling party device 120 report its capabilities of supporting multimedia responses. One assumption in this embodiment is that calling party device 120 stores a capability file of some sort that indicates whether or not calling party device 120 supports multimedia responses. In step 404, processing system 204 receives a response message from calling party device 120 indicating the capabilities of calling party device 120 for supporting multimedia responses. In step 406, processing system 204 processes the capabilities of calling party device 120 to determine whether calling party device 120 supports multimedia responses.

FIG. 5 is a flow chart illustrating another method 500 of determining whether calling party device 120 supports multimedia responses in an exemplary embodiment of the invention. In this embodiment, processing system 204 (see FIG. 2) transmits a query message to subscriber server 116 (see FIG. 1) to retrieve a profile for calling party device 120 in step 502. For example, processing system 204 may transmit a Diameter Sh message to subscriber server 116 requesting the service profile for the user of calling party device 120. One assumption in this embodiment is that the service profile for the user of calling party device 120 indicates the capabilities of calling party device 120 for supporting multimedia responses. In step 504, processing system 204 receives a response message from subscriber server 116 that includes the profile for calling party device 120. In step 506, processing system 204 processes the profile for calling party device 120 to determine whether calling party device 120 supports multimedia responses.

In FIG. 3, if processing system 204 determines that calling party device 120 does not support multimedia responses, then processing system 204 generates a control message instructing call response system 131 in business 130 to provide a voice response to calling party device 120 (after the call is established) in step 306. Processing system 204 then transmits the control message to call response system 131 through interface system 202 in step 308. The control message may specifically include an instruction to call response system 131 to provide a voice response. Alternatively, the control message may indicate that calling party device 120 does not support multimedia messages, and call response system 131 may include rules or policies which instruct call response system 131 to provide a voice response.

If processing system 204 determines that calling party device 120 supports multimedia responses, then processing system 204 may optionally generate a control message instructing call response system 131 in business 130 to provide a multimedia response to calling party device 120 (after the call is established) in step 310. Processing system 204 may then transmit the control message to call response system 131 through interface system 202 in step 312. The control message may specifically include an instruction to call response system 131 to provide a multimedia response. Alternatively, the control message may indicate that calling party device 120 supports multimedia messages, and call response system 131 may include rules or policies which instruct call response system 131 to provide a multimedia response.

Steps 310 and 312 are optional in FIG. 3 because call response system 131 may be configured to provide multimedia responses as a default. Thus, call response system 131 will provide multimedia responses unless otherwise instructed by call response application server 114. In an alternative embodiment, call response system 131 may be configured to provide voice responses as a default. In such an embodiment, steps 306 and 308 would be optional, and steps 310 and 312 would be performed to instruct call response system 131 when to provide multimedia responses. Thus, call response system 131 would provide voice responses unless otherwise instructed by call response application server 114.

In FIG. 3, interface system 202 transmits the call signaling to S-CSCF 112 or call response system 131 to establish the call in step 314. Responsive to receiving the call signaling, call response system 131 responds with the appropriate call signaling to IMS network 100, such as a SIP 200 OK, to set up the call between call response system 131 and calling party device 120. When the call is established, call response system 131 determines whether to provide a multimedia response or a voice response. Thus, call response system 131 processes the control message(s) from call response application server 114 to determine whether to provide a multimedia response or a voice response. If the control message(s) indicate that the calling party device 120 supports multimedia responses, then call response system 131 instructs multimedia response system 132 to provide a multimedia response. If the control message(s) indicate that the calling party device 120 does not support multimedia responses, then call response system 131 instructs voice response system 134 to provide a voice response.

Through the call response service, business 130 can advantageously provide the most desirable type of response to callers. Multimedia responses may provide more information about the business 130 to the callers than a traditional voice response. For example, if business 130 is an automobile dealership, then a multimedia response may not only provide information on how to forward the call to the sales department, the service department, or the parts department. A multimedia response may additionally display an advertisement for one or more automobiles that are being featured by the sales department. A multimedia response may additionally display pictures of the members of the sales department. A multimedia response may additionally display a coupon or advertisement for oil changes or other services provided by the service department. A multimedia response gives the business 130 the opportunity to provide much more content to a caller than a traditional voice response.

At the same time, if callers are using a traditional POTS telephone or some other device that is not multimedia-capable, then business 130 may provide a traditional voice response to these types of callers. Business 130 can thus service both types of callers in an effective manner.

### Example

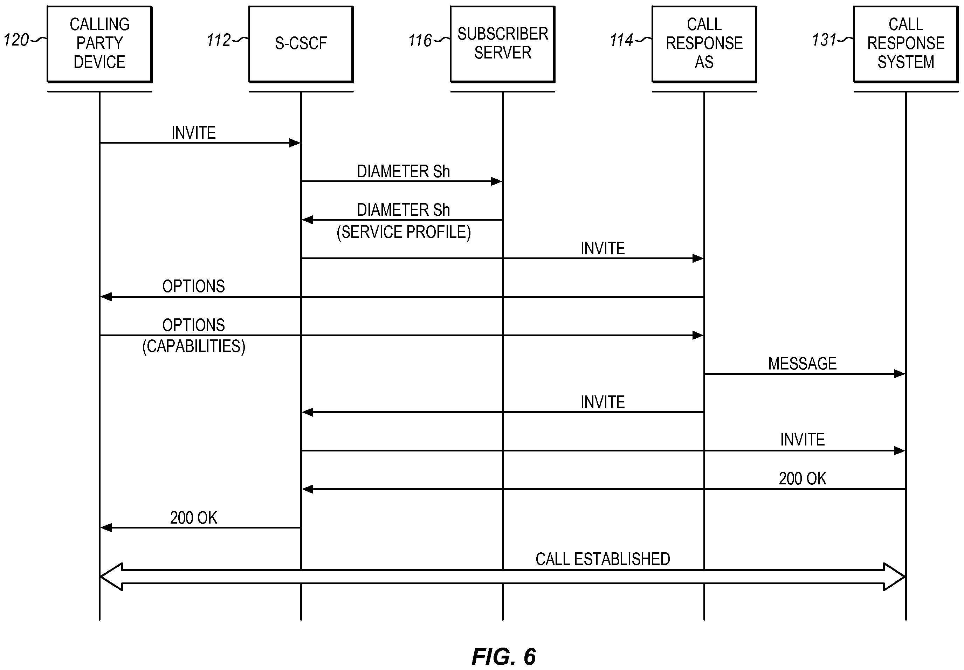

FIG. 6 is a message diagram illustrating the messaging used to provide a call response service in IMS network 100 in an exemplary embodiment of the invention. The messaging used in this example is SIP and Diameter, but other messaging protocols may be used in other embodiments. Assume for example that a calling party places a call to business 130 through calling party device 120. To place the call, calling party device 120 transmits a SIP INVITE to IMS network 100 that is received by S-CSCF 112. S-CSCF 112 processes the SIP INVITE to identify that the destination of the call is business 130. S-CSCF 112 then transmits a Diameter Sh message to subscriber server 116 requesting the service profile for business 130. Subscriber server 116 responds with a Diameter Sh message that includes the service profile or a subset of the service profile for business 130.

S-CSCF 112 then processes the initial filter criteria in the service profile for business 130. The initial filter criteria indicate that business 130 subscribes to the call response service, so S-CSCF 112 forwards the SIP INVITE to call response application server 114.

In response to the SIP INVITE, call response application server 114 determines whether calling party device 120 supports multimedia responses. To make this determination, call response application server 114 transmits a SIP OPTIONS request to calling party device 120 requesting the capabilities of calling party device 120. Call response application server 114 then receives a SIP OPTIONS response which indicates the capabilities of calling party device 120, and processes the capabilities. Assume for this embodiment that call response application server 114 determines that calling party device 120 is not capable of supporting multimedia responses. In response to this determination, call response application server 114 transmits a SIP MESSAGE to call response system 131 instructing call response system 131 to provide a voice response to calling party device 120.

Call response application server 114 then forwards the SIP INVITE back to S-CSCF 112. In turn, S-CSCF 112 forwards the SIP INVITE to call response system 131. Call response system 131 responds toward S-CSCF 112 with a SIP 200 OK. S-CSCF 112 forwards the SIP 200 OK to calling party device 120 to establish the call between call response system 131 and calling party device 120 over IMS network 100. In establishing the call, an RTP session or another type of packet-based session is set up between calling party device 120 and call response system 131 (or between call response system 131 and a media gateway if calling party device 120 is not a packet-based device). With the call established, call response system 131 processes the SIP MESSAGE to determine what type of response to provide (multimedia or voice). In this example, the SIP MESSAGE instructs call response system 131 to provide a voice response, so call response system 131 operates accordingly to provide a voice response only to calling party device 120 instead of a multimedia response.

If call response application server 114 made a determination that calling party device 120 supports multimedia responses, then the SIP MESSAGE would instruct call response system 131 to provide a multimedia response to calling party device 120. After the RTP session was established for the call, call response system 131 would operate to provide a multimedia response to calling party device 120 instead of only a voice response.

Although specific embodiments were described herein, the scope of the invention is not limited to those specific embodiments. The scope of the invention is defined by the following claims.

## Claims

1. An application server (114) in an IP multimedia subsystem, called IMS network (100), operable to provide a call response service for a calling party device (120) which places a call to a business entity (130), said business entity (130) comprising a call response system (131) operable to provide multimedia responses, the application server comprising:
an interface system (202) operable to receive call signalling for a call from said calling party device (120) to said business entity (130) ; and
a processing system (204) operable to determine whether the calling party device (120) supports multimedia responses, to generate a control message instructing the call response system (131) of the business entity (130) to provide a voice response to the calling party device (120) responsive to a determination that the calling party device (120) does not support multimedia responses, and to transmit the control message to the call response system (131) of the business entity (130) through the interface system (202),
**characterised in that** the call response system (131) is an automated attendant, a PBX or a key system, and the control message is a specific message, separated from the signalling used to place the call.

2. The application server (114) of claim 1, wherein:
the processing system (204) is further operable to generate a control message instructing the call response system (131) of the business entity (130) to provide a multimedia response to the calling party device (120) responsive to a determination that the calling party device (120) supports multimedia responses, and to transmit the control message to the call response system (131) of the business entity (130) through the interface system (202).

3. The application server (114) of claim 1, wherein:
the interface system (202) is further operable to forward the call signalling to the call response system (131) of the business entity (130) to establish the call between the call response system (131) of the business entity (130) and the calling party device (120).

4. The application server (114) of claim 1, wherein:
the processing system (204) is further operable to transmit a query message to the calling party device (120) to retrieve the capabilities of the calling party device (120), to receive a response message from the calling party device (120) indicating the capabilities of the calling party device (120) for supporting multimedia responses, and to process the capabilities of the calling party device (120) to determine whether the calling party device (120) supports multimedia responses.

5. The application server (114) of claim 4, wherein the query message comprises a SIP OPTIONS requesting the capabilities of the calling party device (120).

6. The application server (114) of claim 1, wherein:
the processing system (204) is further operable to transmit a query message to a subscriber server (116) to retrieve a profile for the calling party device (120), to receive a response message from the subscriber server (116) that includes the profile for the calling party device (120), and to process the profile for the calling party device (120) to determine whether the calling party device (120) supports multimedia responses.

7. A method of providing a call response service in an IP multimedia subsystem, called IMS network (100), operable to provide a call response service for a calling party device (120) which places a call to a business entity (130), said business entity (130) comprising a call response system (131) operable to provide multimedia responses, the method comprising:
receiving call signalling for a call from said calling party device (120) to said business entity (130);
determining whether the calling party device (120) supports multimedia responses;
generating a control message instructing the call response system (131) of the business entity (130) to provide a voice response to the calling party device (120) responsive to a determination that the calling party device (120) does not support multimedia responses; and
transmitting the control message to the call response system (131) of the business entity (130),
**characterised in that** the call response system (131) is an automated attendant, a PBX or a key system, and the control message is a specific message, separated from the signalling used to place the call.

8. The method of claim 7 further comprising:
generating a control message instructing the call response system (131) of the business entity (130) to provide a multimedia response to the calling party device (120) responsive to a determination that the calling party device (120) supports multimedia responses; and
transmitting the control message to the call response system (131) of the business entity (130).

9. The method of claim 7 further comprising:
forwarding the call signalling to the call response system (131) of the business entity (130) to establish the call between the call response system (131) of the business entity (130) and the calling party device (120).

10. The method of claim 7 wherein determining whether the calling party device (120) supports multimedia responses comprises:
transmitting a query message to the calling party device (120) to retrieve the capabilities of the calling party device (120);
receiving a response message from the calling party device (120) indicating the capabilities of the calling party device (120) for supporting multimedia responses; and
processing the capabilities of the calling party device (120) to determine whether the calling party device (120) supports multimedia responses.

11. The method of claim 10 wherein the query message comprises a SIP OPTIONS requesting the capabilities of the calling party device (120).

12. The method of claim 7 wherein determining whether the calling party device (120) supports multimedia responses comprises:
transmitting a query message to a subscriber server (116) to retrieve a profile for the calling party device (120);
receiving a response message from the subscriber server (116) that includes the profile for the calling party device (120); and
processing the profile for the calling party device (120) to determine whether the calling party device (120) supports multimedia responses.

13. An IP multimedia subsystem, called IMS network (100), operable to provide a call response service for a calling party device (120) which places a call to a business entity (130), said business entity (130) comprising a call response system (131) operable to provide multimedia responses, the IMS network (100) comprising:
an application server (114); and
a serving-call session control function operable to receive call signalling for a call from said calling party device (120) to said business entity (130), to process initial filtering criteria for the business entity (130) to determine whether the business entity (130) subscribes to the call response service, and to forward the call signalling to the application server (114) responsive to a determination that the business entity (130) subscribes to the call response service;
the application server (114) being operable to receive the call signalling, to determine whether the calling party device (120) supports multimedia responses, to generate a control message instructing the call response system (131) of the business entity (130) to provide a voice response to the calling party device (120) responsive to a determination that the calling party device (120) does not support multimedia responses, and to transmit the control message to the call response system (131) of the business entity (130),
**characterised in that** the call response system (131) is an automated attendant, a PBX or a key system, and the control message is a specific message, separated from the signalling used to place the call.

14. The IMS network (100) of claim 13 wherein:
the application server (114) is further operable to generate a control message instructing the call response system (131) of the business entity (130) to provide a multimedia response to the calling party device (120) responsive to a determination that the calling party device (120) supports multimedia responses, and to transmit the control message to the call response system (131) of the business entity (130).

15. The IMS network (100) of claim 13 wherein:
the application server (114) is further operable to forward the call signalling to the serving-call session control function; and
the serving-call session control function is further operable forward the call signalling to the call response system (131) of the business entity (130) to establish the call between the call response system (131) and the calling party device (120).

16. The IMS network (100) of claim 13 wherein:
the application server (114) is further operable to transmit a query message to the calling party device (120) to retrieve the capabilities of the calling party device (120), to receive a response message from the calling party device (120) indicating the capabilities of
the calling party device (120) for supporting multimedia responses, and to process the capabilities of the calling party device to determine whether the calling party device (120) supports multimedia responses.

17. The IMS network (100) of claim 16 wherein the query message comprises a SIP OPTIONS requesting the capabilities of the calling party device (120).

18. The IMS network (100) of claim 13 wherein:
the application server (114) is further operable to transmit a query message to a subscriber server (116) to retrieve a profile for the calling party device (120), to receive a response message from the subscriber server (116) that includes the profile for the calling party device (120), and to process the profile for the calling party device (120) to determine whether the calling party device (120) supports multimedia responses.

## Patentansprüche

1. Anwendungsserver (114) in einem IP-Multimedia-Untersystem, IMS-Netzwerk (100)
genannt, betreibbar zum Bereitstellen eines Anrufantwortdienstes für ein Gerät des anrufenden Teilnehmers (120), welches einen Anruf an eine Geschäftsentität (130) tätigt, wobei besagte Geschäftsentität (130) ein Anrufantwortsystem (131) umfasst, das betreibbar ist zum Bereitstellen von Multimedia-Antworten, wobei der Anwendungsserver umfasst:
ein Schnittstellensystem (202), das betreibbar ist zum Empfangen einer Anrufsignalisierung für einen Anruf von besagtem Gerät des anrufenden Teilnehmers (120) an besagte Geschäftsentität (130); und
ein Verarbeitungssystem (204), das weiterhin betreibbar ist zum Bestimmen, ob das Gerät des anrufenden Teilnehmers (120) Multimedia-Antworten unterstützt, zum Erzeugen einer Steuernachricht, welche das Anrufantwortsystem (131) der Geschäftsentität (130) anweist zum Bereitstellen einer Sprachantwort für das Gerät des anrufenden Teilnehmers (120) als Antwort auf ein Bestimmen, dass das Gerät des anrufenden Teilnehmers (120) Multimedia-Antworten nicht unterstützt, und zum Übertragen der Steuernachricht auf das Anrufantwortsystem (131) der Geschäftseinheit (130) durch das Schnittstellensystem (202), **dadurch gekennzeichnet, dass** das Anrufantwortsystem (131) ein automatisches Antwortsystem, ein PBX- oder ein Schlüsselsystem ist und die Steuernachricht eine spezifische Nachricht ist, die von der Signalisierung getrennt ist, die verwendet wird zum Tätigen des Anrufs.

2. Anwendungsserver (114) nach Anspruch 1, wobei:
das Verarbeitungssystem (204) weiterhin betreibbar ist zum Erzeugen einer Steuernachricht, welche das Anrufantwortsystem (131) der Geschäftsentität (130) anweist zum Bereitstellen einer Multimedia-Antwort für das Gerät des anrufenden Teilnehmers (120) als Antwort auf ein Bestimmen, dass das Gerät des anrufenden Teilnehmers (120) Multimedia-Antworten unterstützt, und zum Übertragen der Steuernachricht auf das Anrufantwortsystem (131) der Geschäftseinheit (130) durch das Schnittstellensystem (202).

3. Anwendungsserver (114) nach Anspruch 1, wobei:
das Schnittstellensystem (202) weiterhin betreibbar ist zum Weiterleiten der Anrufsignalisierung an das Anrufantwortsystem (131) der Geschäftsentität (130) für den Aufbau des Anrufs zwischen dem Anrufantwortsystem (131) der Geschäftsentität (130) und dem Gerät des anrufenden Teilnehmers (120).

4. Anwendungsserver (114) nach Anspruch 1, wobei:
das Verarbeitungssystem (204) weiterhin betreibbar ist zum Übertragen einer Abfragenachricht auf das Gerät des anrufenden Teilnehmers (120) zum Abfragen der Kapazitäten des Geräts des anrufenden Teilnehmers (120), zum Empfangen einer Antwortnachricht von dem Gerät des anrufenden Teilnehmers (120), welche die Kapazitäten des Geräts des anrufenden Teilnehmers (120) zum Unterstützen von Multimedia-Antworten anzeigt, und zum Verarbeiten der Kapazitäten des Geräts des anrufenden Teilnehmers (120) zum Bestimmen, ob das Gerät des anrufenden Teilnehmers (120) Multimedia-Antworten unterstützt.

5. Anwendungsserver (114) nach Anspruch 4, wobei die Abfragenachricht eine
SIP OPTIONS umfasst, die die Kapazitäten des Geräts des anrufenden Teilnehmers (120) anfordert.

6. Anwendungsserver (114) nach Anspruch 1, wobei:
das Verarbeitungssystem (204) weiterhin betreibbar ist zum Übertragen einer Abfragenachricht auf einen Abonnentenserver (116) zum Abrufen eines Profils für das Gerät des anrufenden Teilnehmers (120), zum Empfangen einer Antwortnachricht von dem Abonnentenserver (116), die das Profil des Geräts des anrufenden Teilnehmers (120) einschließt, und zum Verarbeiten des Profils für das Gerät des anrufenden Teilnehmers (120) zum Bestimmen, ob das Gerät des anrufenden Teilnehmers (120) Multimedia-Antworten unterstützt.

7. Verfahren zum Bereitstellen eines Anrufantwortdienstes in einem
IP-Multimedia-Untersystem, IMS-Netzwerk (100) genannt, betreibbar zum Bereitstellen eines Anrufantwortdienstes für ein Gerät des anrufenden Teilnehmers (120), welches einen Anruf an eine Geschäftsentität (130) tätigt, wobei besagte Geschäftsentität (130) ein Anrufantwortsystem (131) umfasst, das betreibbar ist zum Bereitstellen von Multimedia-Antworten, wobei das Verfahren umfasst:
Empfangen einer Anrufsignalisierung für einen Anruf von besagtem Gerät des anrufenden Teilnehmers (120) an besagte Geschäftsentität (130);
Bestimmen, ob das Gerät des anrufenden Teilnehmers (120) Multimedia-Antworten unterstützt;
Erzeugen einer Steuernachricht, die das Anrufantwortsystem (131) der Geschäftseinheit (130) anweist zum Bereitstellen einer Sprachantwort für das Gerät des anrufenden Teilnehmers (120) als Antwort auf ein Bestimmen, dass das Gerät des anrufenden Teilnehmers (120) Multimedia-Antworten nicht unterstützt; und
Übertragen der Steuernachricht auf das Anrufantwortsystem (131) der Geschäftseinheit (130), **dadurch gekennzeichnet, dass** das Anrufantwortsystem (131) ein automatisches Antwortsystem, ein PBX- oder ein Schlüsselsystem ist und die Steuernachricht eine spezifische Nachricht ist, die von der Signalisierung getrennt ist, die verwendet wird zum Tätigen des Anrufs.

8. Verfahren nach Anspruch 7, weiterhin umfassend:
Erzeugen einer Steuernachricht, welche das Anrufantwortsystem (131) der Geschäftsentität (130) anweist zum Bereitstellen einer Multimedia-Antwort für das Gerät des anrufenden Teilnehmers (120) als Antwort auf ein Bestimmen, dass das Gerät des anrufenden Teilnehmers (120) Multimedia-Antworten unterstützt; und
Übertragen der Steuernachricht auf das Anrufantwortsystem (131) der Geschäftseinheit (130).

9. Verfahren nach Anspruch 7, weiterhin umfassend:
Weiterleiten der Anrufsignalisierung an das Anrufantwortsystem (131) der Geschäftsentität (130) für den Aufbau des Anrufs zwischen dem Anrufantwortsystem (131) der Geschäftsentität (130) und dem Gerät des anrufenden Teilnehmers (120).

10. Verfahren nach Anspruch 7, wobei das Bestimmen, ob das Gerät des
anrufenden Teilnehmers (120) Multimedia-Antworten unterstützt, umfasst:
Übertragen einer Abfragenachricht auf das Gerät des anrufenden Teilnehmers (120) zum Abfragen der Kapazitäten des Geräts des anrufenden Teilnehmers (120);
Empfangen einer Antwortnachricht von dem Gerät des anrufenden Teilnehmers (120), welche die Kapazitäten des Geräts des anrufenden Teilnehmers (120) zum Unterstützen von Multimedia-Antworten anzeigt; und
Verarbeiten der Kapazitäten des Geräts des anrufenden Teilnehmers (120) zum Bestimmen, ob das Gerät des anrufenden Teilnehmers (120) Multimedia-Antworten unterstützt.

11. Verfahren nach Anspruch 10, wobei die Abfragenachricht eine SIP OPTIONS umfasst, die die Kapazitäten des Geräts des anrufenden Teilnehmers (120) anfordert.

12. Verfahren nach Anspruch 7, wobei das Bestimmen, ob das Gerät des
anrufenden Teilnehmers (120) Multimedia-Antworten unterstützt, umfasst:
Übertragen einer Abfragenachricht auf einen Abonnentenserver (116) zum Abfragen eines Profils für das Gerät des anrufenden Teilnehmers (120);
Empfangen einer Antwortnachricht von einem Abonnentenserver (116), die das Profil für das Gerät des anrufenden Teilnehmers (120) einschließt; und
Verarbeiten des Profils für das Gerät des anrufenden Teilnehmers (120) zum Bestimmen, ob das Gerät des anrufenden Teilnehmers (120) Multimedia-Antworten unterstützt.

13. IP-Multimedia-Untersystem, IMS-Netzwerk (100) genannt, betreibbar zum
Bereitstellen eines Anrufantwortdienstes für ein Gerät des anrufenden Teilnehmers (120), welches einen Anruf an eine Geschäftsentität (130) tätigt, wobei besagte Geschäftsentität (130) ein Anrufantwortsystem (131) umfasst, das betreibbar ist zum Bereitstellen von Multimedia-Antworten, wobei das IMS-Netzwerk (100) umfasst:
einen Anwendungsserver (114); und
eine bedienende Call Session Control Funktion, die betreibbar ist zum Empfangen einer Anrufsignalisierung für einen Anruf von besagtem Gerät des anrufenden Teilnehmers (120) an besagte Geschäftsentität (130), zum Verarbeiten erstmaliger Filterkriterien für die Geschäftseinheit (130) zum Bestimmen, ob die Geschäftsentität (130) angemeldet ist für den Anrufantwortdienst, und zum Weiterleiten der Anrufsignalisierung an den Anwendungsserver (114) als Antwort auf ein Bestimmen, dass die Geschäftsentität (130) für den Anrufantwortdienst angemeldet ist;
wobei der Anwendungsserver (114) weiterhin betreibbar ist zum Empfangen der Anrufsignalisierung zum Bestimmen, ob das Gerät des anrufenden Teilnehmers (120) Multimedia-Antworten unterstützt, zum Erzeugen einer Steuernachricht, welche das Anrufantwortsystem (131) der Geschäftsentität (130) anweist zum Bereitstellen einer Sprachantwort für das Gerät des anrufenden Teilnehmers (120) als Antwort auf ein Bestimmen, dass das Gerät des anrufenden Teilnehmers (120) Multimedia-Antworten nicht unterstützt, und zum Übertragen der Steuernachricht auf das Anrufantwortsystem (131) der Geschäftseinheit (130), **dadurch gekennzeichnet, dass** das Anrufantwortsystem (131) ein automatisches Antwortsystem, ein PBX-oder ein Schlüsselsystem ist und die Steuernachricht eine spezifische Nachricht ist, die von der Signalisierung getrennt ist, die verwendet wird zum Tätigen des Anrufs.

14. IMS-Netzwerk (100) nach Anspruch 13, wobei:
der Anwendungsserver (114) weiterhin betreibbar ist zum Erzeugen einer Steuernachricht, welche das Anrufantwortsystem (131) der Geschäftsentität (130) anweist zum Bereitstellen einer Multimedia-Antwort für das Gerät des anrufenden Teilnehmers (120) als Antwort auf ein Bestimmen, dass das Gerät des anrufenden Teilnehmers (120) Multimedia-Antworten unterstützt, und zum Übertragen der Steuernachricht auf das Anrufantwortsystem (131) der Geschäftseinheit (130).

15. IMS-Netzwerk (100) nach Anspruch 13, wobei:
der Anwendungsserver (114) weiterhin betreibbar ist zum Weiterleiten der Anrufsignalisierung an die bedienende Call Session Control Funktion; und
die bedienende Call Session Control Funktion weiterhin betreibbar ist zum Weiterleiten der Anrufsignalisierung an das Anrufantwortsystem (131) der Geschäftsentität (130) für den Aufbau des Anrufs zwischen dem Anrufantwortsystem (131) und dem Gerät des anrufenden Teilnehmers (120).

16. IMS-Netzwerk (100) nach Anspruch 13, wobei:
der Anwendungsserver (114) weiterhin betreibbar ist zum Übertragen einer Abfragenachricht auf das Gerät des anrufenden Teilnehmers (120) zum Abrufen der Kapazitäten des Geräts des anrufenden Teilnehmers (120), zum Empfangen einer Antwortnachricht von dem Gerät des anrufenden Teilnehmers (120), welche die Kapazitäten des Geräts des anrufenden Teilnehmers (120) anzeigt zum Unterstützen von Multimedia-Antworten, und zum Verarbeiten der Kapazitäten des Geräts des anrufenden Teilnehmers zum Bestimmen, ob das Gerät des anrufenden Teilnehmers (120) Multimedia-Antworten unterstützt.

17. IMS-Netzwerk (100) nach Anspruch 16, wobei die Abfragenachricht eine
SIP OPTIONS umfasst, die die Kapazitäten des Geräts des anrufenden Teilnehmers (120) anfordert.

18. IMS-Netzwerk (100) nach Anspruch 13, wobei:
der Anwendungsserver (114) weiterhin betreibbar ist zum Übertragen einer Abfragenachricht auf einen Abonnentenserver (116) zum Abrufen eines Profils für das Gerät des anrufenden Teilnehmers (120), zum Empfangen einer Antwortnachricht von dem Abonnentenserver (116), die das Profil des Geräts des anrufenden Teilnehmers (120) einschließt, und zum Verarbeiten des Profils für das Gerät des anrufenden Teilnehmers (120) zum Bestimmen, ob das Gerät des anrufenden Teilnehmers (120) Multimedia-Antworten unterstützt.

## Revendications

1. Serveur d'application (114) dans un sous-système multimédia IP, appelé réseau IMS (100), permettant de fournir un service de réponse aux appels à un dispositif d'appelant (120) qui appelle une entité d'entreprise (130), ladite entité d'entreprise (130) comprenant un système de réponse aux appels (131) permettant de fournir des réponses multimédias, le serveur d'application comprenant :
un système d'interface (202) permettant de recevoir une signalisation d'appel pour un appel dudit dispositif d'appelant (120) à ladite entité d'entreprise (130) ; et
un système de traitement (204) permettant de déterminer si le dispositif d'appelant (120) prend en charge les réponses multimédias, de générer un message de commande demandant au système de réponse aux appels (131) de l'entité d'entreprise (130) de fournir une réponse vocale au dispositif d'appelant (120) en réaction à la détermination du fait que le dispositif d'appelant (120) ne prend pas en charge les réponses multimédias, et de transmettre le message de commande au système de réponse aux appels (131) de l'entité d'entreprise (130) par le biais du système d'interface (202),
**caractérisé en ce que** le système de réponse aux appels (131) est un standard automatique, un PBX ou un système multiligne, et le message de commande est un message spécifique, distinct de la signalisation utilisée pour établir l'appel.

2. Serveur d'application (114) selon la revendication 1, dans lequel :
le système de traitement (204) permet en outre de générer un message de commande demandant au système de réponse aux appels (131) de l'entité d'entreprise (130) de fournir une réponse multimédia au dispositif d'appelant (120) en réaction à la détermination du fait que le dispositif d'appelant (120) prend en charge les réponses multimédias, et de transmettre le message de commande au système de réponse aux appels (131) de l'entité d'entreprise (130) par le biais du système d'interface (202).

3. Serveur d'application (114) selon la revendication 1, dans lequel :
le système d'interface (202) permet en outre de transférer la signalisation d'appel au système de réponse aux appels (131) de l'entité d'entreprise (130) afin d'établir l'appel entre le système de réponse aux appels (131) de l'entité d'entreprise (130) et le dispositif d'appelant (120).

4. Serveur d'application (114) selon la revendication 1, dans lequel :
le système de traitement (204) permet en outre de transmettre un message de demande au dispositif d'appelant (120) afin de récupérer les capacités du dispositif d'appelant (120), de recevoir un message de réponse du dispositif d'appelant (120) indiquant les capacités du dispositif d'appelant (120) pour la prise en charge des réponses multimédias, et de traiter les capacités du dispositif d'appelant (120) afin de déterminer si le dispositif d'appelant (120) prend en charge les réponses multimédias.

5. Serveur d'application (114) selon la revendication 4, dans lequel le message de demande comprend une requête SIP OPTIONS demandant les capacités du dispositif d'appelant (120).

6. Serveur d'application (114) selon la revendication 1, dans lequel :
le système de traitement (204) permet en outre de transmettre un message de demande à un serveur d'abonné (116) afin de récupérer un profil du dispositif d'appelant (120), de recevoir un message de réponse du serveur d'abonné (116) qui inclut le profil du dispositif d'appelant (120), et de traiter le profil du dispositif d'appelant (120) afin de déterminer si le dispositif d'appelant (120) prend en charge les réponses multimédias.

7. Procédé de fourniture d'un service de réponse aux appels dans un sous-système multimédia IP, appelé réseau IMS (100), permettant de fournir un service de réponse aux appels à un dispositif d'appelant (120) qui appelle une entité d'entreprise (130), ladite entité d'entreprise (130) comprenant un système de réponse aux appels (131) permettant de fournir des réponses multimédias, le procédé comprenant les étapes suivantes :
recevoir une signalisation d'appel pour un appel dudit dispositif d'appelant (120) à ladite entité d'entreprise (130) ;
déterminer si le dispositif d'appelant (120) prend en charge les réponses multimédias ;
générer un message de commande demandant au système de réponse aux appels (131) de l'entité d'entreprise (130) de fournir une réponse vocale au dispositif d'appelant (120) en réaction à la détermination du fait que le dispositif d'appelant (120) ne prend pas en charge les réponses multimédias ; et
transmettre le message de commande au système de réponse aux appels (131) de l'entité d'entreprise (130),
**caractérisé en ce que** le système de réponse aux appels (131) est un standard automatique, un PBX ou un système multiligne, et le message de commande est un message spécifique, distinct de la signalisation utilisée pour établir l'appel.

8. Procédé selon la revendication 7 comprenant en outre les étapes suivantes :
générer un message de commande demandant au système de réponse aux appels (131) de l'entité d'entreprise (130) de fournir une réponse multimédia au dispositif d'appelant (120) en réaction à la détermination du fait que le dispositif d'appelant (120) prend en charge les réponses multimédias ; et
transmettre le message de commande au système de réponse aux appels (131) de l'entité d'entreprise (130).

9. Procédé selon la revendication 7 comprenant en outre l'étape suivante :
transférer la signalisation d'appel au système de réponse aux appels (131) de l'entité d'entreprise (130) afin d'établir l'appel entre le système de réponse aux appels (131) de l'entité d'entreprise (130) et le dispositif d'appelant (120).

10. Procédé selon la revendication 7 dans lequel la détermination du fait que le dispositif d'appelant (120) prend ou non en charge les réponses multimédias comprend les étapes suivantes :
transmettre un message de demande au dispositif d'appelant (120) afin de récupérer les capacités du dispositif d'appelant (120) ;
recevoir un message de réponse du dispositif d'appelant (120) indiquant les capacités du dispositif d'appelant (120) pour la prise en charge des réponses multimédias ; et
traiter les capacités du dispositif d'appelant (120) afin de déterminer si le dispositif d'appelant (120) prend en charge les réponses multimédias.

11. Procédé selon la revendication 10 dans lequel le message de demande comprend une requête SIP OPTIONS demandant les capacités du dispositif d'appelant (120).

12. Procédé selon la revendication 7 dans lequel la détermination du fait que le dispositif d'appelant (120) prend ou non en charge les réponses multimédias comprend les étapes suivantes :
transmettre un message de demande à un serveur d'abonné (116) afin de récupérer un profil du dispositif d'appelant (120) ;
recevoir un message de réponse du serveur d'abonné (116) qui inclut le profil du dispositif d'appelant (120) ; et
traiter le profil du dispositif d'appelant (120) afin de déterminer si le dispositif d'appelant (120) prend en charge les réponses multimédias.

13. Sous-système multimédia IP, appelé réseau IMS (100), permettant de fournir un service de réponse aux appels à un dispositif d'appelant (120) qui appelle une entité d'entreprise (130), ladite entité d'entreprise (130) comprenant un système de réponse aux appels (131) permettant de fournir des réponses multimédias, le réseau IMS (100) comprenant :
un serveur d'application (114) ; et
une fonction de commande de session d'appel de service permettant de recevoir une signalisation d'appel pour un appel dudit dispositif d'appelant (120) à ladite entité d'entreprise (130), de traiter des critères de filtrage initial pour l'entité d'entreprise (130) afin de déterminer si l'entité d'entreprise (130) est abonnée au service de réponse aux appels, et de transférer la signalisation d'appel au serveur d'application (114) en réaction à la détermination du fait que l'entité d'entreprise (130) est abonnée au service de réponse aux appels ;
le serveur d'application (114) permettant de recevoir la signalisation d'appel, de déterminer si le dispositif d'appelant (120) prend en charge les réponses multimédias, de générer un message de commande demandant au système de réponse aux appels (131) de l'entité d'entreprise (130) de fournir une réponse vocale au dispositif d'appelant (120) en réaction à la détermination du fait que le dispositif d'appelant (120) ne prend pas en charge les réponses multimédias, et de transmettre le message de commande au système de réponse aux appels (131) de l'entité d'entreprise (130),
**caractérisé en ce que** le système de réponse aux appels (131) est un standard automatique, un PBX ou un système multiligne, et le message de commande est un message spécifique, distinct de la signalisation utilisée pour établir l'appel.

14. Réseau IMS (100) selon la revendication 13 dans lequel :
le serveur d'application (114) permet en outre de générer un message de commande demandant au système de réponse aux appels (131) de l'entité d'entreprise (130) de fournir une réponse multimédia au dispositif d'appelant (120) en réaction à la détermination du fait que le dispositif d'appelant (120) prend en charge les réponses multimédias, et de transmettre le message de commande au système de réponse aux appels (131) de l'entité d'entreprise (130).

15. Réseau IMS (100) selon la revendication 13 dans lequel :
le serveur d'application (114) permet en outre de transférer la signalisation d'appel à la fonction de commande de session d'appel de service ; et
la fonction de commande de session d'appel de service permet en outre de transférer la signalisation d'appel au système de réponse aux appels (131) de l'entité d'entreprise (130) afin d'établir l'appel entre le système de réponse aux appels (131) et le dispositif d'appelant (120).

16. Réseau IMS (100) selon la revendication 13 dans lequel :
le serveur d'application (114) permet en outre de transmettre un message de demande au dispositif d'appelant (120) afin de récupérer les capacités du dispositif d'appelant (120), de recevoir un message de réponse du dispositif d'appelant (120) indiquant les capacités du dispositif d'appelant (120) pour la prise en charge de réponses multimédias, et de traiter les capacités du dispositif d'appelant afin de déterminer si le dispositif d'appelant (120) prend en charge les réponses multimédias.

17. Réseau IMS (100) selon la revendication 16 dans lequel le message de demande comprend une requête SIP OPTIONS demandant les capacités du dispositif d'appelant (120).

18. Réseau IMS (100) selon la revendication 13 dans lequel :
le serveur d'application (114) permet en outre de transmettre un message de demande à un serveur d'abonné (116) afin de récupérer un profil du dispositif d'appelant (120), de recevoir un message de réponse du serveur d'abonné (116) qui inclut le profil du dispositif d'appelant (120), et de traiter le profil du dispositif d'appelant (120) afin de déterminer si le dispositif d'appelant (120) prend en charge les réponses multimédias.
